# EUROPEAN PATENT APPLICATION

(11) **EP 0 926 020 A2**
(43) Date of publication of application: **30.06.1999**
(21) Application number: 98203989.3
(22) Date of filing: 25.11.1998
(51) Int. Cl.: B60R 25/00, B60R 25/04

(54) **Vehicle control using fm subcarrier messaging**

(30) Priority: 22.12.1997 US 995802
(71) Applicant: DELCO ELECTRONICS CORPORATION, Kokomo Indiana 46902 (US)
(72) Inventor: Adams, Jay James, Noblesville, Indiana 46060 (US); Wright, Scott Alan, Fairmount, Indiana 46928 (US)
(74) Representative: Denton, Michael John

(57) **Abstract**

A radio-based vehicle control system that employs a network (10) of radio signal transmission stations (12, 14, 16, 18) for transmitting radio frequency signals containing broadcast information as well as a data message and a vehicle identification code provided on a subcarrier of the radio frequency signals. The vehicle radio (50) receives the radio frequency signals and deciphers the data message and vehicle identification code and produces a control signal based on the message if the vehicle identification code matches as assigned vehicle code. An actuator (64, 72, 74, 76, 78, 80, 82, 84, or 86) controls at least one device in the vehicle (20) based on the control signal.

## Description

### BACKGROUND OF THE INVENTION

The present invention generally relates to a control system for controlling devices on a vehicle, and more particularly relates to a radio-signal responsive vehicle control system for remotely controlling one or more devices on a vehicle.

Vehicle control techniques have been proposed to communicate with a vehicle remotely to control various vehicle functions. For example, the door locks on a vehicle can be controlled remotely to unlock the vehicle doors. This is particularly useful when the vehicle operator has inadvertently locked the keys inside the vehicle. Another vehicle control function includes remotely actuating the vehicle ignition system to start the vehicle to warm or cool the passenger compartment before entering the vehicle. Other proposed vehicle control functions include disabling the vehicle engine, locking the vehicle doors. controlling the temperature such as air conditioning or heater functions, controlling a display to display a message to the driver, as well as actuating various other vehicle control devices.

Previous attempts at remotely controlling vehicle functions have employed cellular telecommunications, satellite communications, and paging units to provide wireless communication. These and other wireless communication techniques are generally based on high-cost hardware that must be added to the vehicle's system. In addition, known vehicle control techniques usually involve high-cost service and provide only limited geographic areas of coverage.

One known vehicle control approach is disclosed in U.S. Patent No. 5,113,427 entitled "Radio-Signal-Responsive Vehicle Device Control System," which is hereby incorporated by reference. The aforementioned issued patent discloses a radio-signal-responsive vehicle control system that employs a personal radio paging unit as a receiving unit. According to this paging approach, the paging unit receives a calling signal from a telephone for remotely controlling an automobile-mounted device. This approach requires the addition of a separate paging device for receiving communication signals and, in addition, can incur rather high-cost service for subscribing to the paging service. Further, known paging-based control devices are generally limited in geographic coverage and, therefore, may be unable to provide continuous service, particularly in rural regions.

It is, therefore, one object of the present invention to provide a low-cost vehicle control system with continuous geographic area of coverage.

### SUMMARY OF THE INVENTION

The present invention provides remote vehicle control in a low-cost system over a continuous geographic region of coverage. To achieve this and other advantages and in accordance with the purpose of the present invention as embodied and described herein, the present invention provides for a radio-based vehicle control system which has at least one radio signal transmission station for transmitting radio frequency (RF) signals. According to the preferred embodiment, a network of radio signal transmission stations are employed to cover a large geographic region of coverage. The RF signals include radio station broadcast information as well as a data message and vehicle identification code provided on a subcarrier of the RF signals. A radio receiver located in a vehicle receives the RF signals and demodulates the data message and vehicle identification code. The vehicle identification code is compared to an assigned vehicle code for the vehicle and produces a control signal based on the message if the vehicle identification code matches an assigned vehicle code. An actuator controls at least one device in a vehicle based on the received and detected control signal. Accordingly, each vehicle may be easily addressed by way of the vehicle identification code and a vehicle control function can be actuated in response to the data message. Display of a message or other control function on the vehicle may be accomplished with the use of the existent vehicle radio without requiring the addition of costly hardware to the vehicle.

These and other features, objects, and benefits of the invention will be recognized by those who practice the invention and by those skilled in the art, from reading the following specification and claims, together with reference to the accompanying drawings.

### BRIEF DESCRIPTION OF THE DRAWINGS

In the drawings:
FIG. 1 is a schematic diagram illustrating a network of FM radio stations employed according to a radio-based vehicle control system of the present invention;
FIG. 2 is a block diagram illustrating a radio and other hardware components in a vehicle employed in the vehicle control system of the present invention; and
FIG. 3 is a flow diagram illustrating the methodology of performing vehicle control according to the present invention.

### DETAILED DESCRIPTION OF THE PREFERRED EMBODIMENTS

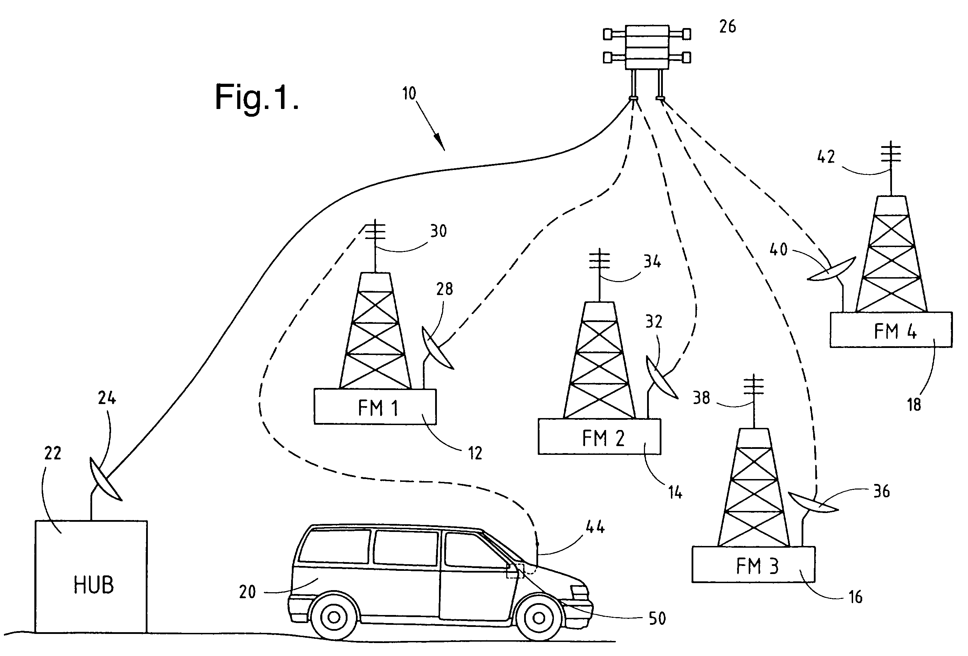

Turning now to FIG. 1, a network 10 of frequency modulated (FM) radio stations, such as radio stations FM1 12, FM2 14, FM3 16, and FM4 18, are employed to transmit control signals to one or more vehicles, such as motor vehicle 20, according to the present invention. The network 10 includes a plurality of participating radio stations that together transmit FM radio station signals over a large continuous geographic area of coverage. For example, the network 10 may be configured to provide nationwide coverage for the United States, or may be sufficiently large to cover the North American continent. While the present invention is described in connection with the transmission of frequency modulated (FM) radio frequency signals, it should be appreciated that the principles of the present invention may be applicable to other types of radio frequency signals, such as the transmission of amplitude modulated (AM) radio station signals.

Also shown with the network 10 is a hub station 22 which may include a ground-based transmission station having a satellite transmission antenna 24. According to one embodiment, network 10 further employs a space-borne satellite 26 for receiving instructional signals transmitted from hub station 22, including a vehicle identification code and corresponding message, and for retransmitting such signals to each of the participating radio stations 12, 14, 16, and 18. Alternately, hub station 22 may employ other means for transmitting the vehicle identification code and corresponding message to each of the radio stations, such as telephone communication.

Radio station FM1 12 is shown to include a satellite receiving antenna 28 for receiving the transmitted vehicle identification code and message signals from satellite 26. Radio station FM1 12, in turn, attaches the vehicle identification code and corresponding message to a subcarrier associated with the radio station FM transmission signal. The radio station FM1 12, in turn, transmits via transmitting antenna 30 an FM radio frequency broadcast signal corresponding to a designated FM radio frequency along with the attached subcarrier data information containing the vehicle identification code and corresponding message. The radio station broadcast signal with subcarrier data information is transmitted over a geographic area of coverage.

The radio station FM2 14 likewise includes a satellite receiving antenna 32 for receiving the transmitted vehicle identification code and message signals from satellite 26. Radio station FM2 14 likewise attaches the vehicle identification code and corresponding message to a subcarrier associated with its designated FM radio frequency broadcast signal. Radio station FM2 14 transmits via antenna 34 the FM radio frequency broadcast signal with attached subcarrier data information over a geographic area of coverage.

Similarly, radio stations FM3 16 and FM4 18 each include a satellite dish receiving antenna 36 and 40, respectively, for receiving the transmitted vehicle identification code and message signals from satellite 26. Radio station FM3 16 attaches the vehicle identification code and corresponding message to the subcarrier associated with its FM radio frequency broadcast signal for transmission via antenna 38 over a geographic area of coverage. Likewise, radio station FM4 18 attaches the vehicle identification code and corresponding message to the subcarrier associated with its FM radio frequency broadcast signal for transmission via antenna 42 over a geographic area of coverage. It should be appreciated that each of the radio stations 12, 14, 16, and 18 transmits its own radio frequency broadcast signal at a designated FM frequency, and each of the transmitted broadcast signals contains the vehicle identification code and corresponding message as designated at hub 22. Participating radio stations 12, 14, 16, and 18 preferably transmit these broadcast signals over partially overlapping areas of coverage such that a continuous coverage area is provided by network 10.

As a consequence of the network 10 of radio stations, a vehicle 20 located within the geographic area of coverage may receive the radio station broadcast signals via its audio radio 50 and corresponding radio antenna 44. According to the network 10 of stations as provided herein, the vehicle's audio radio 50 should be capable of receiving radio frequency broadcast signals transmitted from at least one of the participating radio stations, as long as the vehicle 20 is located within the overall geographic area provided by network 10.

The vehicle identification code and corresponding message are provided as data signals carried on a subcarrier which is added to the stereo multiplex signal or monophonic signal at the input of the FM transmitter associated with each of the participating radio stations 12, 14, 16, and 18. According to one embodiment, the radio data system (RDS) is employed as the subcarrier and is generally applied to FM sound broadcasts in the frequency range of 87.5 MHz to 108.0 MHz, which may carry either stereophonic or monophonic programs. According to the radio data system, during stereo broadcasts, the subcarrier frequency will be locked to the third harmonic of the 19 kHz pilot-tone, while during monophonic broadcasts the frequency of the subcarrier will be 57 kHz. According to this approach, the subcarrier is amplitude-modulated by the shaped and biphase coded data signal and the subcarrier is suppressed, and the RDS subcarrier may include an amplitude-modulated, double sideband, suppressed carrier modulation. This method of modulation can alternately be thought of as a form of two-phase-shift-keying with a phase deviation of _90 degrees. The radio data system subcarrier is one example of a known system that may be employed for carrying the vehicle identification code and corresponding message information according to the present invention.

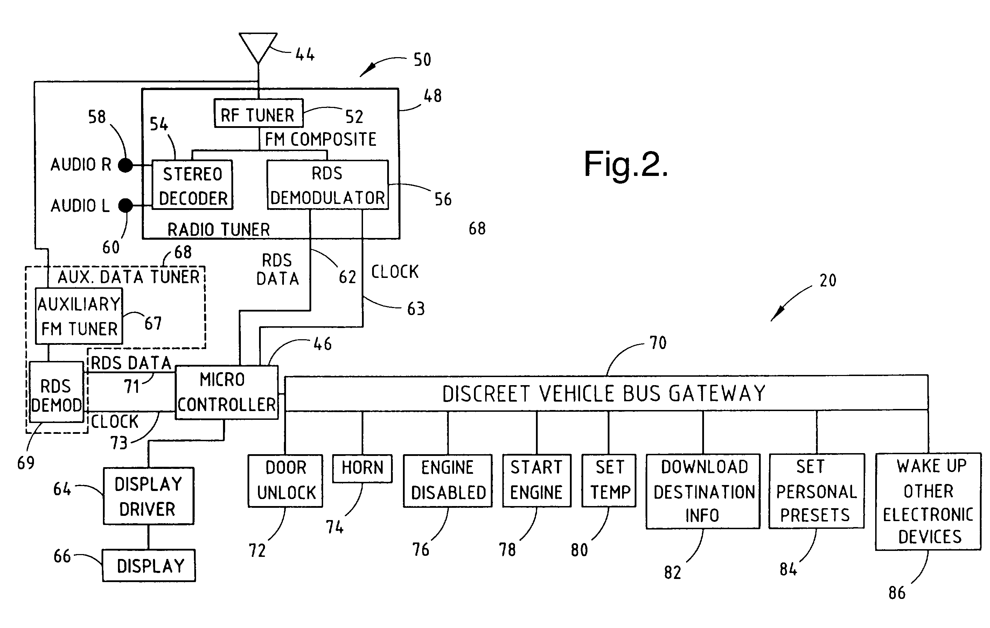

Referring to FIG. 2, the vehicle mounted audio radio 50, as well as a discreet vehicle bus gateway 70 and corresponding control devices of vehicle 20, are illustrated therein. The audio radio 50 includes a primary radio tuner 48 coupled to antenna 44 for receiving radio frequency signals therefrom. Radio tuner 48 includes a radio frequency (RF) tuner 52 as well as a stereo decoder 54 and a radio data system (RDS) demodulator 56. RF tuner 52 receives the radio frequency signals from antenna 44 and provides the FM composite information to both stereo decoder 54 and RDS demodulator 56. Stereo decoder 54 decodes the audio information and provides a pair of outputs labeled audio R 58 and audio L 60 for supplying the audio right and audio left audio output signals, as should be evident to one skilled in the art. The RDS demodulator 56 decodes the FM composite information to determine the RDS data and supplies the decoded RDS data on RDS data line 62 and corresponding clock line 63.

The RDS demodulator 56 preferably contains a bandpass filter and a digital demodulator to regenerate the RDS data stream out of the multiplex signal. Accordingly, the RDS demodulator 56 decodes the information attached to the subcarrier of the received FM signal and outputs the decoded RDS data on RDS data and clock lines 62 and 63. According to one example, RDS demodulator 56 may include a standard, off-the-shelf demodulator such as Part No. SAA6579T, manufactured and sold by Philips Semiconductor, or other demodulators for decoding the subcarrier data information.

In addition, audio radio 50 has a micro controller 46 for controlling radio operations, as well as controlling actuation of vehicle functions as instructed via the vehicle identification code and the corresponding message. The micro controller 46 also compares an assigned vehicle code with received vehicle identification codes to determine if the vehicle is being addressed for control of vehicle devices or functions. Micro controller 46 determines whether a message is to be displayed and, if so, provides an output signal to a display driver 64 which drives a display 66 to display the message. If a message is to be displayed, display driver 64 directs display 66 to display the message to the vehicle operator. According to one embodiment, display 66 includes a radio display as is customarily provided on a car radio. Alternately, display 66 may include a display associated with a vehicle information center or navigation system or other electronic device, as may be provided in a vehicle. According to one example, display 60 may provide a message to a vehicle driver, such as "EMERGENCY CALL HOME."

The micro controller 46 also supplies an output signal to discreet vehicle bus gateway 70. The discreet vehicle bus gateway 70 includes the conventional bus as is commonly provided on a vehicle for communicating vehicle information. Vehicle bus 70 may include a conventional discreet communication bus known in the industry. According to one embodiment, vehicle bus 70 provides discreet outputs to relays associated with control of various vehicle control devices. For example, bus 70 may control a door unlock 72 for unlocking the passenger doors, horn control 74 for actuating the car horn, engine disabled control 76 or engine start 78 for controlling the engine, and vehicle temperature control 80. In addition, other vehicle controls include downloading destination information 82, setting personal preset values for setting personal preferences including seat control, temperature, etc. In addition, bus 70 may wake up other electronic devices 86, such as a cellular phone and GPS receiver. According to another embodiment, vehicle bus 70 may include a ClassÊII vehicle data bus of the type that sends a digital control signal to intelligent control devices on the vehicle.

In addition to the primary radio tuner 48, car radio 50 may also include an optional auxiliary data tuner 68. Auxiliary data tuner 68 likewise preferably has an FM tuner 67 for receiving FM signals from antenna 44, and an RDS demodulator 69 that determines the RDS data and outputs the RDS data to micro controller 46 on RDS data line 71 and corresponding clock line 73. Auxiliary data tuner 68 ensures that the vehicle car radio 50 is receiving signals from a participating radio station, regardless of whatever frequency the primary radio tuner 48 is tuned to. As a consequence, if primary radio tuner 48 is set to a non-participating radio station, auxiliary data tuner 68 may automatically adjust to receive signals from a participating radio station to ensure the receipt of RDS data including the vehicle identification code and corresponding message attached to the FM signal subcarrier.

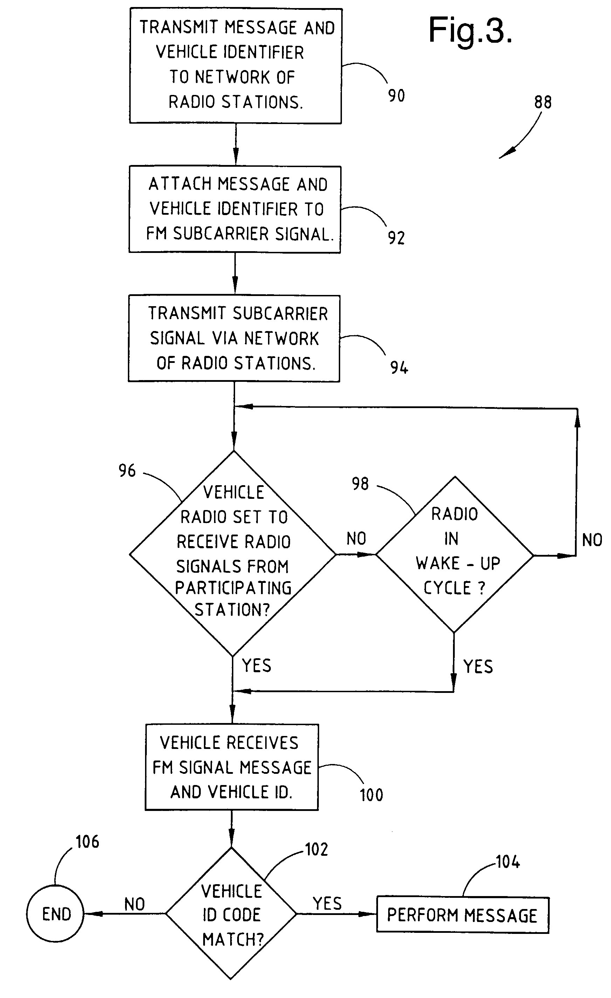

With particular reference to FIG. 3, the operation of the vehicle messaging system is shown according to a control methodology 88. Messaging methodology 88 includes transmitting the message and vehicle identification code to a network of radio stations as provided in block 90. According to block 92, the message and vehicle identification code are attached to the FM subcarrier signal for each of the participating radio stations. The subcarrier signal is then transmitted via a network of participating radio stations as shown in block 94.

At each vehicle radio, decision block 96 checks to see if the vehicle radio is set to receive radio frequency signals from a participating radio station and, if not, decision block 98 checks if the radio is in a wake-up cycle. When the vehicle radio is shut off, the radio turns to one of the participating stations and then powers down. According to the wake-up cycle, the radio wakes up in sync with a message transmission from participating radio stations and checks for any messages according to a predetermined wake-up cycle, such as once every minute, for example. If a message is detected during a check on the wake-up cycle, the vehicle identification code and corresponding message are received by the vehicle, according to block 100. Otherwise, the vehicle radio will continue to check for the receipt of signals from a participating station.

With the vehicle identification code and message received according to block 100, methodology 88 proceeds to decision block 102 to check if the vehicle identification code matches a predetermined, assigned vehicle code, which is preferably unique to that particular vehicle. If the vehicle identification code does not match the particular assigned vehicle code, methodology 88 is complete pursuant to block 106 and the message is ignored by that vehicle. If the vehicle identification code matches the assigned vehicle code, the message is designated to that particular vehicle and an action is performed according to the message as provided in block 104. Performing the message may include displaying a message, such as "EMERGENCY CALL HOME," or performing a vehicle function, such as controlling the vehicle door locks, controlling the vehicle engine, or controlling various other vehicle functions.

Accordingly, the vehicle control system of the present invention provides remote control of vehicle functions by communicating with the vehicle's audio radio via broadcast radio station signals over a wide geographic area of coverage. While FM radio frequency signals are employed with an RDS subcarrier for transmitting the vehicle identification code and corresponding message, it should be appreciated that the present invention may be applicable to other types of communication signals. For example, amplitude-modulated (AM) radio signal transmissions may be employed. It is also conceivable that the teachings of the present invention may be applicable to television station transmission or other high-speed subcarrier systems.

It will be understood by those who practice the invention and those skilled in the art, that various modifications and improvements may be made to the invention without departing from the spirit of the disclosed concept. The scope of protection afforded is to be determined by the claims and by the breadth of interpretation allowed by law.

## Claims

1. A radio-based vehicle control system comprising:
at least one radio signal transmission station (12, 14, 16, or 18) for transmitting radio frequency signals over a geographic region at a radio station frequency, said radio frequency signals having radio data information and further having a data message and vehicle identification code;
a radio receiver (50) located on a vehicle (20) for receiving said radio frequency signals and demodulating said data message and vehicle identification code;
a controller (46) for comparing said vehicle identification code to an assigned vehicle code for a particular vehicle and producing a control signal based on said message if said vehicle identification code matches said assigned vehicle code; and
an actuator (64, 72, 74, 76, 78, 80, 82, 84, or 86) for controlling at least one device on the vehicle (20) based on said control signal.

2. The system as defined in claim 1, wherein said data message and vehicle identification code are transmitted on a subcarrier of said radio frequency signal.

3. The system as defined in claim 2, wherein said subcarrier is a radio data system subcarrier.

4. The system as defined in claim 1, wherein said radio transmission station (12) comprises an FM radio station for transmitting FM radio frequency signals.

5. The system as defined in claim 1, wherein said radio receiver (50) includes a demodulator (56) for demodulating said data message and said vehicle identification code.

6. The system as defined in claim 1, wherein said at least one device comprises a display (66) for displaying said message.

7. The system as defined in claim 1, wherein said actuator comprises a vehicle controller (46).

8. The system as defined in claim 1, wherein said radio receiver (50) comprises first and second radio tuners (48 and 68), wherein one of said first and second radio tuners (48 and 68) is tuned to receive said radio frequency signals.

9. The system as defined in claim 1, wherein said system comprises a plurality of radio signal transmission stations (12, 14, 16, and 18), each transmitting radio frequency signals over a geographic region at its own radio station frequency, each of said radio signal transmission stations transmitting its own radio data information as well as said data message and said vehicle identification code.

10. A radio-based vehicle control system comprising:
a network (10) of radio signal transmission stations (12, 14, 16, and 18), each for transmitting radio frequency signals at its radio station frequency so as to transmit radio data information, each of said radio signal transmission stations (12, 14, 16, and 18) further transmitting a data message and a vehicle identification code;
a radio receiver (50) located on a vehicle (20) for receiving said radio frequency signals and demodulating said data message and vehicle identification code;
a controller (46) for comparing said vehicle identification code to an assigned vehicle code for a particular vehicle and producing a control signal based on said message if said vehicle identification code matches said assigned vehicle code; and
an actuator (64, 72, 74, 76, 78, 80, 82, 84, or 86) for controlling at least one device in the vehicle (20) based on said control signal.

11. The system as defined in claim 10, wherein said data message and vehicle identification code are transmitted on a subcarrier of said radio frequency signal.

12. The system as defined in claim 11, wherein said subcarrier is a radio data system subcarrier.

13. The system as defined in claim 10, wherein said network (10) of radio signal transmission systems comprises a plurality of FM radio stations (12, 14, 16, and 18) for transmitting FM radio frequency signals.

14. The system as defined in claim 10, wherein said radio receiver (50) includes a demodulator (56) for demodulating said data message and said vehicle identification code.

15. The system as defined in claim 10, wherein said at least one device comprises a display (66) for displaying said message.

16. The system as defined in claim 10, further comprising a data line (70) for communicating said control signal to said at least one device in the vehicle (20).

17. A method (88) of remotely controlling functions of a vehicle (20), said method comprising the steps of:
transmitting (94) radio frequency signals from at least one radio signal transmission station at its radio station frequency, said radio frequency signals having radio data information and further having a data message and vehicle identification code;
receiving (100) said radio frequency signals via a radio receiver located on a vehicle;
deciphering said data message and said vehicle identification code;
comparing (102) said vehicle identification code to an assigned vehicle code for a particular vehicle;
producing a control signal based on said message if said vehicle identification code matches said assigned vehicle code; and
controlling (104) at least one device on the vehicle based on said control signal.

18. The method as defined in claim 17, further comprising the step of transmitting said data message and said vehicle identification code on a subcarrier (92) of said radio frequency signal.

19. The method as defined in claim 17, further comprising demodulating said data message and said vehicle identification code.

20. The method as defined in claim 17, further comprising transmitting radio frequency signals from a plurality of participating radio stations, each of said plurality of radio stations transmitting its own radio data information as well as said data message and said vehicle identification code.
